# FASCICULE DE BREVET EUROPEEN

(11) **EP 2 804 181 B1**
(45) Date de publication et mention de la délivrance du brevet: **04.10.2017**
(21) Numéro de dépôt: 14167318.6
(22) Date de dépôt: 07.05.2014
(51) Int. Cl.: B25J 5/00, G05D 1/00, G21F 7/06, G21C 17/003, G21C 17/013, G21C 17/08

(54) **Dispositif de surveillance et de collecte d'information d'une zone à risque potentiel d'irradiation**
Überwachungs- und Informationssammelvorrichtung in einer Zone mit potenziellem Strahlungsrisiko
Device for monitoring and collecting information in an area with a potential risk of irradiation

(30) Priorité: 15.05.2013 FR 1354340
(43) Date de publication de la demande: 19.11.2014
(73) Titulaire: ECA Robotics, 83130 La Garde (FR)
(72) Inventeur: Goder, Thierry, 83160 La Valette du Var (FR); Fradel, Victorien, 83400 HYERES (FR)
(74) Mandataire: Santarelli

(56) Documents cités:
- JP-A- S5 876 799
- JP-A- S5 931 488
- JP-A- H02 154 148
- JP-A- H07 286 870
- JP-A- S56 138 285
- JP-A- 2004 343 438
- JP-A- 2008 268 074

## Description

La présente invention concerne le domaine des dispositifs de surveillance, et en particulier, d'une zone potentiellement irradiée ou risquant de l'être, telle que les centrales nucléaires, notamment les bâtiments réacteur ou de stockage de combustible, ou les sites de stockages de déchets.

Lors d'accidents nucléaires survenant dans de tels lieux, il peut y avoir rupture du confinement, des radiations et des explosions qui détruisent la plupart des dispositifs de surveillance. Les équipements à l'intérieur de l'infrastructure nucléaire peuvent être rendus inopérants et l'accès aux locaux rendu difficile voire impossible par la présence de gravats ou d'un niveau de radiation et/ou de température élevée. L'intervention en zone fortement irradiée et contaminée nécessite l'utilisation de moyens télécommandés tels que des robots. Toutefois, leur déploiement à partir de l'extérieur de la zone irradiée ou contaminée est souvent difficile voire impossible à cause par exemple, de la présence de débris au sol ainsi que la faible tenue aux radiations des équipements.

Il existe des robots mobiles permettant d'accéder aux zones présentes dans des milieux hostiles, depuis un conteneur de transport.

On peut se référer à cet égard au document US 4, 736, 826 qui décrit un robot mobile relié par un câble à une station de pilotage. Le câble est fixé à l'intérieur d'une enceinte de stockage présentant un logement permettant de stocker le robot mobile et d'éviter tout déplacement du robot lorsque celui-ci est stocké à l'intérieur de l'enceinte. L'enceinte de stockage fait office de conteneur utilisé pour le stockage du robot mobile lors de son transport afin de supprimer tout risque de contamination extérieure.

Toutefois, il est souvent difficile d'amener l'enceinte de stockage dans la zone irradiée à la suite d'un accident. JPH07286870 divulgue un dispositif de surveillance et de collecte d'informations dans une centrale nucléaire.

Le but de la présente invention est de pallier les inconvénients de l'état de la technique.

La présente invention vise à remédier à ces inconvénients en disposant de manière permanente à l'intérieur d'une infrastructure nucléaire, et notamment de zones à risque potentiel d'irradiation, un dispositif de surveillance et de collecte d'informations apte à résister aux contraintes environnementales et apte à être déployé uniquement en cas de besoin, notamment après un accident nucléaire.

L'invention a pour objet un dispositif de surveillance et de collecte d'informations d'une zone à risque potentiel d'irradiation selon l'objet de la revendication 1. Ce dispositif comprend au moins un caisson de stockage destiné à être disposé de manière permanente dans une infrastructure nucléaire et des moyens de communication avec un poste de pilotage destiné à être disposé à l'extérieur de l'infrastructure nucléaire.

Le caisson de stockage est intrinsèquement protégé d'éventuelles agressions extérieures et comprend des moyens d'inspection télévisuelle et des moyens de mesure de paramètres environnementaux, tels que par exemple, la température extérieure, le niveau de radiation, l'hydrométrie, l'analyse de gaz, déployables depuis l'intérieur de l'infrastructure nucléaire.

Le dispositif de surveillance permet de surveiller et de collecter les informations provenant d'une zone irradiée ou à risque potentiel de l'être, telle que par exemple dans l'enceinte d'une centrale nucléaire, au niveau du bâtiment réacteur ou du bâtiment combustible tout en étant protégé efficacement contre les agressions extérieures telles que, par exemple, un séisme, une chute, un niveau de radiation important, une température élevée par exemple de 400°C, le feu, l'immersion ou encore la déflagration. Lors d'accident nucléaire, les informations collectées par le dispositif de surveillance sont alors immédiatement transmises au poste de pilotage, ce qui permet d'obtenir rapidement les informations nécessaires afin de superviser une éventuelle intervention. Ce dispositif de surveillance et de collecte d'information comprend au moins un dispositif d'inspection et/ou d'intervention destiné à être stocké dans le caisson de stockage et comprenant des moyens de communication avec le caisson de stockage.

Le dispositif d'inspection et/ou d'intervention comprend, par exemple, des moyens d'inspection télévisuelle et/ou des moyens de mesure des paramètres environnementaux, tels que par exemple, la température extérieure, le niveau de radiation, l'hydrométrie, l'analyse de gaz.

Les moyens de communication du dispositif d'inspection peuvent être des liaisons filaires ou à distance, par exemple par radio.

Le dispositif de surveillance et/ou d'intervention communique avec le poste de pilotage déporté via le caisson de stockage.

Avantageusement, le caisson de stockage comprend une porte blindée escamotable permettant le déploiement du dispositif d'inspection et/ou d'intervention.

Selon un mode de réalisation préférable, le dispositif de surveillance et de collecte d'informations comprend au moins un module de communication relais intrinsèquement protégé d'éventuelles agressions extérieures et destiné à être disposé de manière permanente dans une infrastructure nucléaire et comportant des moyens de communication avec le caisson de stockage, le poste de pilotage déporté et le dispositif d'inspection et/ou d'intervention.

Le module de communication relais permet à la fois de compléter les informations collectées par le caisson de stockage et le dispositif d'inspection et/ou d'intervention, et de servir de relais au dispositif d'inspection et/ou d'intervention. Dans ce cas, le dispositif d'inspection et/ou d'intervention communique avec le poste de pilotage déporté via le module de communication relais.

Le module de communication relais comprend, par exemple, des moyens de mesure des paramètres environnementaux et/ou des moyens d'inspection télévisuelle.

Avantageusement, le module de communication relais comprend des moyens de mesure du niveau de radiation, de l'hydrométrie, des moyens d'analyse de gaz et une caméra, par exemple une caméra infrarouge.

Le module de communication relais peut comprendre une enveloppe étanche et blindée afin d'être protégé efficacement contre les agressions extérieures telles que, par exemple, un séisme, une chute, un niveau de radiation important, une température élevée par exemple de 400°C, le feu, l'immersion ou encore la déflagration.

Selon un mode de réalisation, le dispositif d'inspection est un robot mobile.

Le robot mobile peut comprendre des moyens de mesure du niveau de radiation, de l'hydrométrie, des moyens d'analyse de gaz et une caméra, par exemple de type infrarouge.

Le robot peut également comprendre des moyens d'intervention, tels que par exemple au moins un bras manipulateur permettant de déblayer une zone encombrée de débris, notamment après une explosion nucléaire. Le caisson de stockage comprend une enveloppe étanche et blindée réalisée en matériaux assurant la radioprotection et le confinement de ses équipements internes. L'enveloppe est, par exemple, réalisée en acier, en plomb ou en béton ou en une combinaison de ces matériaux.

Le caisson de stockage peut comprendre au moins une caméra d'inspection. Avantageusement, le caisson de stockage comprend trois caméras d'inspection.

Les moyens de communication du caisson de stockage sont, par exemple, des liaisons filaires ou à distance par radio.

D'autres buts, caractéristiques et avantages de l'invention apparaîtront à la lecture de la description suivante, donnée uniquement à titre d'exemple non limitatif, et faite en référence aux dessins annexés sur lesquels :
- la figure 1 est une vue générale d'un dispositif de surveillance et de collecte d'informations dans une infrastructure nucléaire ;
- la figure 2 est une vue en perspective du caisson de stockage selon la figure 1 ;
- la figure 3 est une vue en coupe d'un caisson de stockage comprenant un dispositif d'inspection et/ou d'intervention ;
- la figure 4 est une vue en coupe IV-IV du caisson de stockage selon la figure 3 ;
- la figure 5 illustre schématiquement le dispositif de surveillance global avec l'ensemble des systèmes; et
- la figure 6 représente une vue de côté d'un module de communication relais selon la figure 5.

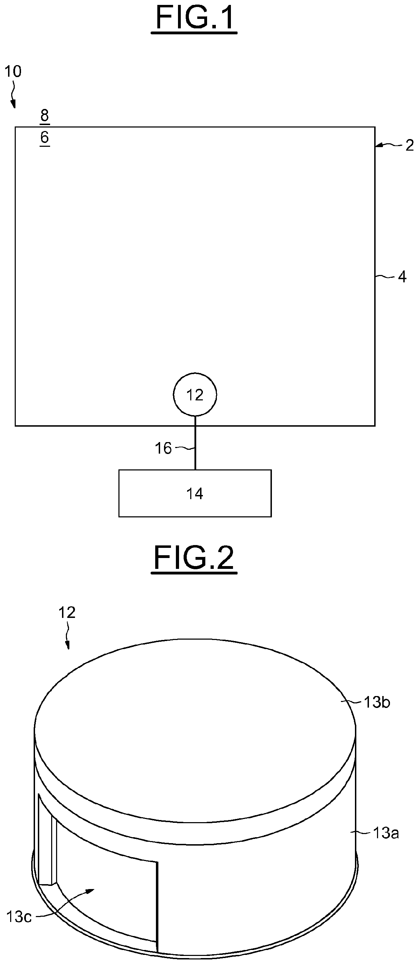

Tel qu'il est illustré sur la figure 1, un dispositif de surveillance et de collecte d'information, référencé 10 dans son ensemble, est destiné à surveiller et à collecter les informations provenant d'une zone irradiée ou à risque potentiel de l'être dans une infrastructure nucléaire 2, telle que par exemple l'enceinte d'une centrale nucléaire, au niveau du bâtiment réacteur ou du bâtiment combustible. Tel que représenté, un mur d'enceinte 4 délimite l'intérieur 6 et l'extérieur 8 de l'infrastructure nucléaire 2.

Le dispositif de surveillance et de collecte d'information 10 comprend un caisson de stockage 12 destiné à être disposé de manière permanente à l'intérieur 6 de l'infrastructure nucléaire 2 et un poste de pilotage 14 destiné à être disposé à l'extérieur 8 de l'infrastructure nucléaire 2 et relié au caisson de stockage 12 par un réseau électrique 16.

Le poste de pilotage 14 déporté permet au personnel situé à l'extérieur 8 de la zone à risque de récupérer les données fournies par le caisson de stockage 12. Ainsi, lors d'un incident dans l'infrastructure nucléaire 2, les équipes d'intervention peuvent se regrouper dans le poste de pilotage 14 déporté de l'installation défaillante. Ce poste de pilotage 14 permet de superviser les opérations après l'accident en fonction des données reçues par le caisson de stockage 12.

Tel qu'illustré en détails sur les figures 2 à 4, le caisson de stockage 12 est intrinsèquement protégé d'éventuelles agressions extérieures et comprend à cet effet une enveloppe 13a étanche et blindée réalisée, par exemple, en acier, plomb, béton ou en une combinaison de matières assurant la radioprotection et le confinement des équipements présents à l'intérieur de l'enveloppe. L'enveloppe 13a étanche et blindée permet une protection efficace contre les agressions extérieures telles que, par exemple, un séisme, une chute, un niveau de radiation important, une température élevée par exemple de 400°C, le feu, l'immersion ou encore la déflagration. Tel qu'illustré, le caisson de stockage 12 comprend un couvercle 13b. On notera que le caisson de stockage 12 pourrait être réalisé d'une seule pièce.

Selon le mode de réalisation illustré, le caisson de stockage 12 est cylindrique. On notera que l'on pourrait prévoir toute autre forme pour le caisson de stockage 12.

Le caisson de stockage 12 comprend, à titre d'exemple non limitatif, des moyens de mesure de paramètres environnementaux, tels que la température, le niveau de radiation, l'hydrométrie, l'analyse de gaz. Tel qu'illustré, le caisson de stockage 12 comprend un capteur 16 de mesure du niveau de radiation.

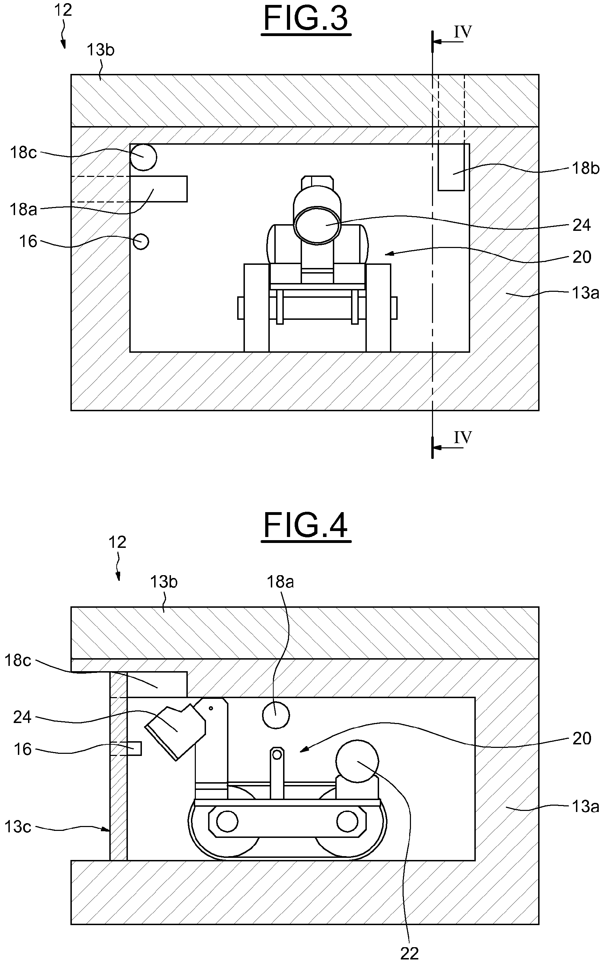

Afin de visualiser l'état de la zone à risque après par exemple un accident nucléaire, le caisson de stockage 12 comprend des moyens d'inspection télévisuelle 18 telle que par exemple une caméra. A titre d'exemple non limitatif, le caisson de stockage 12 est muni de trois caméras 18a, 18b, 18c illustrés sur la figure 3. Les caméras utilisées possèdent une tenue importante aux radiations élevées.

Le caisson de stockage 12 comprend également des moyens de communication (non représentés) avec le poste de pilotage déporté 14. Ainsi, le caisson de stockage 12 peut collecter une pluralité d'informations sur l'environnement extérieur à l'intérieur 6 de l'infrastructure nucléaire 2 et les transmettre à l'extérieur 8 de la zone à risque. En d'autres termes, les moyens de communication du caisson de stockage 12 transmettent les informations recueillies par le moyens d'inspection télévisuelle 18 et les moyens de mesure 16 de paramètres environnementaux au poste de pilotage 14. Les moyens de communication peuvent comprendre un câble de liaison ombilicale ou une antenne de communication.

Tel qu'illustré sur les figures 3 et 4, le dispositif de surveillance et de collecte d'information 10 comprend un dispositif d'inspection et/ou d'intervention 20 destiné à être stocké dans le caisson de stockage 12 afin d'augmenter le rayon de collecte d'informations dans la zone potentiellement irradiée. Le dispositif d'inspection et/ou d'intervention 20 comprend des moyens de mesure 22 de paramètres environnementaux, tels que la température, le niveau de radiation, l'hydrométrie, l'analyse de gaz. Le dispositif d'inspection et/ou d'intervention 20 comprend, par exemple, un capteur de température et un capteur de mesure du niveau de radiation.

Afin de visualiser l'état de la zone à risque après par exemple un accident nucléaire, le dispositif d'inspection et/ou d'intervention 20 comprend des moyens d'inspection télévisuelle 24 telle que par exemple une caméra. Le dispositif d'inspection et/ou d'intervention 20 peut comprendre également un système d'éclairage (non représenté) dédié ainsi qu'un moyen accumulateur d'énergie électrique non représenté), telle que par exemple une batterie électrique. A cet effet, le caisson de stockage 12 pourrait comprendre un moyen (non représenté) permettant de recharger la batterie du dispositif d'inspection et/ou d'intervention 20.

Le dispositif d'inspection et/ou d'intervention 20 comprend également des moyens de communication (non représenté) avec le caisson de stockage 12. Les moyens de communication du dispositif d'inspection et/ou d'intervention 20 transmettent les informations recueillies par les moyens de mesure 22 de paramètres environnementaux et/ou les moyens d'inspection télévisuelle 24 au poste de pilotage 14 directement ou par l'intermédiaire du caisson de stockage 12. Les moyens de communication peuvent comprendre un câble de liaison filaire ou une antenne radio de communication présentant, par exemple, une portée d'environ 150m. Le caisson de stockage 12 pourrait comprendre à cet effet, un enrouleur (non représenté) permettant d'enrouler la liaison filaire du dispositif d'inspection et/ou d'intervention 20.

Le pilotage du dispositif d'inspection et/ou d'intervention 20 est ainsi géré à distance depuis le poste de pilotage 14 déporté par l'intermédiaire du caisson de stockage 12. En d'autres termes, le pilotage du dispositif d'inspection et/ou d'intervention 20 est géré à distance via les moyens de communications du caisson de stockage et du dispositif d'inspection et/ou d'intervention 20.

Tel qu'illustré sur les figures 2 et 4, le caisson de stockage 12 comprend une porte blindée 13c escamotable permettant le déploiement du dispositif d'inspection et/ou d'intervention 20. Le capteur de mesure 16 du niveau de radiation du caisson de stockage 12 est monté, par exemple, à l'intérieur de la porte blindée 13c afin d'augmenter sa durée de vie.

Tel qu'illustré, le dispositif d'inspection et/ou d'intervention 20 est un robot mobile. Le robot mobile 20 peut être soit un robot d'inspection, permettant la collecte d'informations, soit un robot d'intervention, soit un robot d'inspection et d'intervention. Le robot mobile d'intervention permet par exemple de déblayer une zone, notamment après une explosion nucléaire et comprend, à titre d'exemple non limitatif, au moins un bras manipulateur (non représenté). Ainsi, les robots d'intervention permettent d'agrandir la zone à surveiller. En variante, on pourrait prévoir tout autre dispositif d'inspection et/ou d'intervention, tel que par exemple, un drone volant, sous-marin, un bras télescopique...

En variante, on pourrait prévoir que le dispositif de surveillance 10 ne dispose pas de dispositif d'inspection et/ou d'intervention 20 dans le caisson de stockage 12.

Le poste de pilotage 14 peut comprendre, par exemple, une armoire de puissance afin d'alimenter le caisson de stockage 12, au moins un écran de supervision et des moyens de pilotage notamment de la porte blindée du caisson de stockage, mais également des robots mobiles 20.

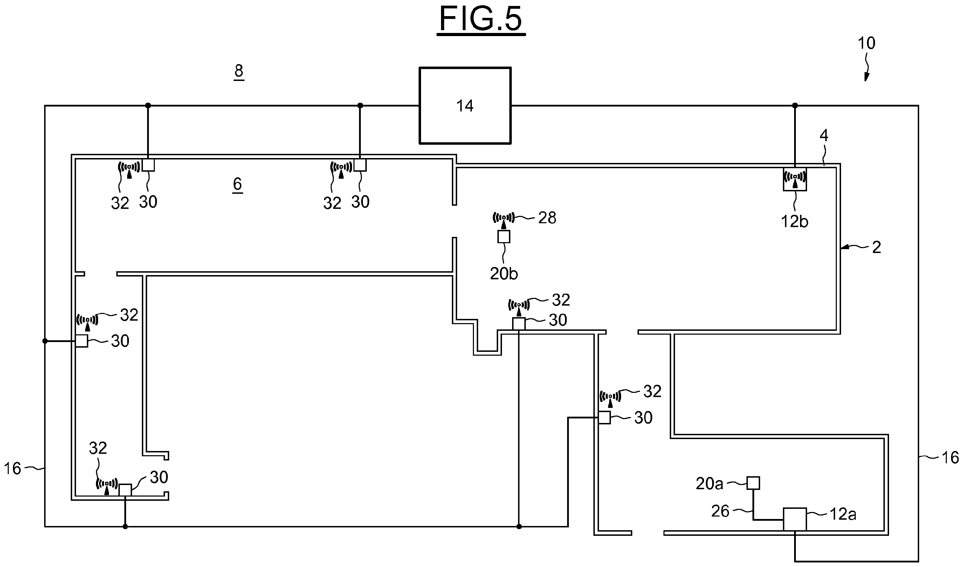

Le mode de réalisation illustré sur la figure 5, dans lequel les mêmes éléments ont les mêmes références, diffère du mode de réalisation illustré à la figure 1 par le nombre de caisson de stockage 12 et par la présence de modules de communication relais 30.

Tel qu'illustré sur la figure 5, le dispositif de surveillance 10 comprend un premier caisson de stockage 12a et un deuxième caisson de stockage 12b disposés de manière permanente dans l'infrastructure nucléaire 2 et reliés au poste de pilotage déporté 14 par un réseau électrique 16. Les caissons de stockage 12a, 12b sont identiques au caisson de stockage 12 illustré sur les figures 1 à 4 et ne seront pas davantage décrits. En variante, on pourrait prévoir que le dispositif de surveillance 10 comprenne un nombre de caissons de stockage 12 supérieur à deux.

Chacun des caissons de stockage 12a, 12b enferme un dispositif d'inspection et/ou d'intervention 20a, 20b. Les dispositifs d'inspection et/ou d'intervention 20a, 20b sont identiques au dispositif d'inspection et/ou d'intervention 20 illustré sur les figures 3 et 4 et ne seront pas davantage décrits.

Le dispositif d'inspection et/ou d'intervention 20a comporte un moyen de communication filaire 26 avec le caisson de stockage associé 12a. Le dispositif d'inspection et/ou d'intervention 20b comporte un moyen de communication à distance 28, par exemple par radio, avec le caisson de stockage associé 12b.

Le dispositif de surveillance 10 comprend une pluralité de modules de communication relais 30 répartis et disposés de manière permanente à l'intérieur 6 de l'infrastructure nucléaire 2 et reliés au poste de pilotage déporté 14 par le réseau électrique 16. Chaque module de communication relais 30 comprend à cet effet des moyens de communication 32 par antenne radio 34 avec respectivement le poste de pilotage 14, le dispositif d'inspection et/ou d'intervention 20b et les caissons de stockage 12a, 12b. Ainsi, les modules de communication 30 jouent le rôle d'un relais permettant de transmettre les informations recueillies par le dispositif d'inspection 20b et/ou le caisson de stockage 12a, 12b vers le poste de pilotage 14 déporté.

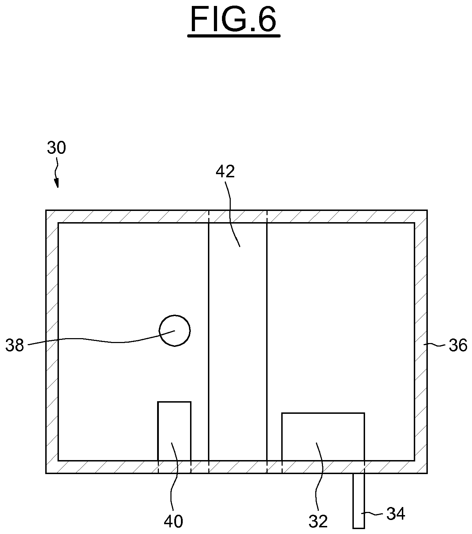

Chaque module de communication relais 30, illustré en détails sur la figure 6, est intrinsèquement protégé d'éventuelles agressions extérieures et comprend à cet effet une enveloppe 36 étanche et blindée réalisée, par exemple, en acier, plomb, béton ou en une combinaison de matières assurant la radioprotection et le confinement des équipements présents à l'intérieur de l'enveloppe 36. Chaque module de communication 30 comprend également des moyens de mesure de paramètres environnementaux, tels que, par exemple, un capteur de température 38, un capteur de mesure du niveau de radiation 40. Chaque module de communication 30 peut comprendre, à titre d'exemple non limitatif, des moyens de mesure (non représentés) de l'hydrométrie, l'analyse de gaz, ainsi que des moyens d'inspection télévisuelle 42 telle que par exemple une caméra.

Grâce aux modules de communication relais 30, la zone potentiellement irradiée surveillée par le dispositif de surveillance 10 est agrandie, ce qui permet aux équipes d'intervention d'obtenir toutes les informations nécessaires afin de piloter les dispositifs d'inspection et/ou d'intervention 20 et de superviser les opérations après l'accident survenu.

Grâce à la présence permanente d'un dispositif de surveillance à l'intérieur de zones à risque potentiel d'irradiation, la collecte d'informations, nécessaires afin de superviser une éventuelle intervention, est immédiate. De plus, le dispositif de surveillance est apte à résister aux contraintes environnementales et à être déployé notamment après un accident nucléaire.

## Revendications

1. Dispositif de surveillance et de collecte d'informations (10) d'une zone à risque potentiel d'irradiation, pour une infrastructure nucléaire (2) comprenant un mur d'enceinte (4) délimitant un intérieur (6) et un extérieur (8), le dispositif comprenant au moins un caisson de stockage (12, 12a, 12b) apte à être disposé de manière permanente à l'intérieur (6) de l'infrastructure nucléaire (2) et comprenant un poste de pilotage (14) apte à être disposé à l'extérieur (8) de l'infrastructure nucléaire (2), ledit caisson de stockage (12, 12a, 12b) comprenant des moyens de communication avec le poste de pilotage (14), des premiers moyens d'inspection télévisuelle (18) et de mesure (16) de paramètres environnementaux, et, pour être intrinsèquement protégé d'éventuelles agressions extérieures, une enveloppe (13a) étanche et blindée, les moyens de communication du caisson de stockage étant adaptés pour transmettre au poste de pilotage (14) les informations recueillies par lesdits moyens d'inspection télévisuelle (18) et de mesure (16) , le dispositif comprenant en outre au moins un dispositif d'inspection et/ou d'intervention (20, 20a, 20b) stocké dans le caisson de stockage (12, 12a, 12b), ledit dispositif d'inspection et/ou d'intervention (20, 20a, 20b) comprenant des moyens de communication (26, 28) avec le caisson de stockage (12a, 12b) et comprenant des seconds moyens d'inspection télévisuelle (24) et/ou de mesure (22) des paramètres environnementaux.

2. Dispositif selon la revendication 1, dans lequel les moyens de communication (26, 28) du dispositif d'inspection et/ou d'intervention (20a, 20b) avec le caisson de stockage (12a, 12b) sont des liaisons filaires (26) ou à distance (28).

3. Dispositif selon l'une quelconque des revendications 1 et 2, dans lequel le caisson de stockage (12, 12a, 12b) comprend une porte blindée (13 c) escamotable permettant le déploiement du dispositif d'inspection et/ou d'intervention (20, 20a, 20b).

4. Dispositif selon l'une quelconque des revendications 1 à 3, comprenant au moins un module de communication relais (30) intrinsèquement protégé d'éventuelles agressions extérieures et apte à être disposé de manière permanente dans l'infrastructure nucléaire (2) et comportant des moyens de communication (32, 34) avec le caisson de stockage (12a, 12b), le poste de pilotage (14) déporté et le dispositif d'inspection et/ou d'intervention (20b).

5. Dispositif selon la revendication 4, dans lequel les moyens de communication (32, 34) du module de communication relais (30) sont arrangés à transmettre les informations recueillies par le dispositif d'inspection (20b) et/ou le caisson de stockage (12a, 12b) vers le poste de pilotage (14) déporté.

6. Dispositif selon la revendication 4 ou 5, dans lequel le module de communication relais (30) comprend des moyens de mesure (38, 40) des paramètres environnementaux et/ou des moyens d'inspection télévisuelle (42).

7. Dispositif selon la revendication 6, dans lequel le module de communication relais (30) comprend des moyens de mesure du niveau de radiation (40), de l'hydrométrie, des moyens d'analyse de gaz et une caméra (42).

8. Dispositif selon l'une quelconque des revendications 4 à 7, dans lequel le module de communication relais (30) comprend une enveloppe étanche et blindée (36).

9. Dispositif selon l'une quelconque des revendications 1 à 8, dans lequel le dispositif d'inspection et/ou d'intervention est un robot mobile (20, 20a, 20b).

10. Dispositif selon la revendication 9, dans lequel le robot mobile (20, 20a, 20b) comprend des moyens de mesure (22) du niveau de radiation, de l'hydrométrie, des moyens d'analyse de gaz et une caméra (24).

11. Dispositif selon la revendication 9 ou 10, dans lequel le robot mobile (20, 20a, 20b) comprend des moyens d'intervention.

12. Dispositif selon l'une quelconque des revendications précédentes, dans lequel le caisson de stockage (12, 12a, 12b) comprend une enveloppe étanche et blindée (13a) réalisée en matériaux assurant la radioprotection et le confinement de ses équipements internes.

13. Dispositif selon la revendication 12, dans lequel l'enveloppe (13a) est réalisée en acier, en plomb ou en béton.

14. Dispositif selon l'une quelconque des revendications précédentes, dans lequel le caisson de stockage (12, 12a, 12b) comprend au moins une caméra d'inspection (18).

15. Dispositif selon une quelconque des revendications précédentes, dans lequel les moyens de communication du caisson de stockage (12, 12a, 12b) avec le poste de pilotage (14) sont des liaisons filaires ou à distance.

## Patentansprüche

1. Vorrichtung zum Überwachen und Sammeln von Informationen (10) eines Bereichs mit potenziellem Strahlungsrisiko für eine nukleare Infrastruktur (2), enthaltend eine Hüllwand (4), die einen Innenraum (6) und einen Außenraum (8) voneinander abgrenzt, wobei die Vorrichtung zumindest einen Lagerbehälter (12, 12a, 12b) enthält, der dazu geeignet ist, im Innenraum (6) der nuklearen Infrastruktur (2) dauerhaft angeordnet zu werden und einen Leitstand (14) aufweist, der dazu geeignet ist, im Außenraum (8) der nuklearen Infrastruktur (2) angeordnet zu werden, wobei der Lagerbehälter (12, 12a, 12b) Kommunikationsmittel zum Kommunizieren mit dem Leitstand (14), erste Mittel zur Fernsehinspektion (18) und Messung (16) von Umgebungsparametern und, zum intrinsischen Schutz vor eventuellen Einwirkungen von außen, einen abgedichteten und abgeschirmten Mantel (13a) aufweist, wobei die Kommunikationsmittel des Lagerbehälters dazu ausgelegt sind, dem Leitstand (14) Informationen zu übertragen, die von den Mitteln zur Fernsehinspektion (18) und Messung (16) gesammelt werden, wobei die Vorrichtung ferner zumindest eine Inspektions- und/oder Interventionsvorrichtung (20, 20a, 20b) aufweist, die in dem Lagerbehälter (12, 12a, 12b) gelagert ist, wobei die Inspektions- und/oder Interventionsvorrichtung (20, 20a, 20b) Kommunikationsmittel (26, 28) zum Kommunizieren mit dem Lagerbehälter (12a, 12b) und zweite Mittel zur Fernsehinspektion (24) und/oder Messung (22) der Umgebungsparameter aufweist.

2. Vorrichtung nach Anspruch 1, wobei die Kommunikationsmittel (26, 28) zum Kommunizieren der Inspektions- und/oder Interventionsvorrichtung (20a, 20b) mit dem Lagerbehälter (12a, 12b) drahtgebundene Verbindungen (26) oder Remote-Verbindungen (28) sind.

3. Vorrichtung nach einem der Ansprüche 1 und 2, wobei der Lagerbehälter (12, 12a, 12b) eine einklappbare, abgeschirmte Tür (13a) aufweist, welche den Einsatz der Inspektions- und/oder Interventionsvorrichtung (20, 20a, 20b) gestattet.

4. Vorrichtung nach einem der Ansprüche 1 bis 3, enthaltend zumindest ein Relais-Kommunikationsmodul (30), das intrinsisch vor eventuellen Einwirkungen von außen geschützt und dazu geeignet ist, dauerhaft in der nuklearen Infrastruktur (2) angeordnet zu werden und Kommunikationsmittel (32, 34) zum Kommunizieren mit dem Lagerbehälter (12a, 12b), dem externen Leitstand (14) und der Inspektions- und/oder Interventionsvorrichtung (20b) aufweist.

5. Vorrichtung nach Anspruch 4, wobei die Kommunikationsmittel (32, 34) des Relais-Kommunikationsmoduls (30) dazu vorgesehen sind, von der Inspektionsvorrichtung (20b) und/oder dem Lagerbehälter (12a, 12b) gesammelte Informationen zum externen Leitstand (14) zu übertragen.

6. Vorrichtung nach Anspruch 4 oder 5, wobei das Relais-Kommunikationsmodul (30) Messeinrichtungen (38, 40) zum Messen der Umgebungsparameter und/oder Fernsehinspektionseinrichtungen (42) enthält.

7. Vorrichtung nach Anspruch 6, wobei das Relais-Kommunikationsmodul (30) Messeinrichtungen zum Messen des Strahlungspegels (40), der Feuchtigkeit, Gasanalysemittel und eine Kamera (42) enthält.

8. Vorrichtung nach einem der Ansprüche 4 bis 7, wobei das Relais-Kommunikationsmodul (30) einen abgedichteten und abgeschirmten Mantel (36) enthält.

9. Vorrichtung nach einem der Ansprüche 1 bis 8, wobei die Inspektions- und/oder Interventionsvorrichtung ein beweglicher Roboter (20, 20a, 20b) ist.

10. Vorrichtung nach Anspruch 9, wobei der bewegliche Roboter (20, 20a, 20b) Messeinrichtungen (22) zum Messen des Strahlungspegels, der Feuchtigkeit, Gasanalysemittel und eine Kamera (24) enthält.

11. Vorrichtung nach Anspruch 9 oder 10, wobei der bewegliche Roboter (20, 20a, 20b) Interventionseinrichtungen enthält.

12. Vorrichtung nach einem der vorangehenden Ansprüche, wobei der Lagerbehälter (12, 12a, 12b) einen abgedichteten und abgeschirmten Mantel (13a) enthält, der aus Materialien hergestellt ist, die den Strahlenschutz und die Einschließung seiner internen Ausstattungen sicherstellen.

13. Vorrichtung nach Anspruch 12, wobei der Mantel (13a) aus Stahl, Blei oder Beton hergestellt ist.

14. Vorrichtung nach einem der vorangehenden Ansprüche, wobei der Lagerbehälter (12, 12a, 12b) zumindest eine Inspektionskamera (18) enthält.

15. Vorrichtung nach einem der vorangehenden Ansprüche, wobei die Kommunikationsmittel zum Kommunizieren des Lagerbehälters (12, 12a, 12b) mit dem Leitstand (14) drahtgebundene Verbindungen oder Remote-Verbindungen sind.

## Claims

1. Device (10) for monitoring and collecting information from an area with potential risk of irradiation, for a nuclear infrastructure (2) comprising an enclosure wall (4) delimiting an inside (6) and an outside (8), the device comprising at least one storage box (12, 12a, 12b) suitable for being situated permanently at the inside (6) of the nuclear infrastructure (2) and comprising a control station (14) suitable for being situated at the outside (8) of the nuclear infrastructure (2), said storage box (12, 12a, 12b) comprising means for communication with the control station (14), first means for televisual inspection (18) and for measurement (16) of environmental parameters, and, to be intrinsically protected from possible external aggressions, a fluid-tight shielded jacket (13a), the means for communication of the storage box being adapted to transmit to the control station (14) the information collected by said means for televisual inspection (18) and for measurement (16), the device further comprising at least one inspection and/or intervention device (20, 20a, 20b) stored in the storage box (12, 12a, 12b), said inspection and/or intervention device (20, 20a, 20b) comprising means for communication (26, 28) with the storage box (12a, 12b) and comprising second means for televisual inspection (24) and/or for measurement (22) of the environmental parameters.

2. Device according to Claim 1, wherein the means for communication (26, 28) of the inspection and/or intervention device (20a, 20b) with the storage box (12a, 12b) are wired (26) or remote (28) links.

3. Device according to any one of Claims 1 and 2, wherein the storage box (12, 12a, 12b) comprises a retractable shielded door (13c) making it possible to deploy the inspection and/or intervention device (20, 20a, 20b).

4. Device according to any one of Claims 1 to 3, comprising at least one relay communication module (30) intrinsically protected from possible external aggressions and adapted to be situated permanently within the nuclear infrastructure (2) and comprising means for communication (32, 34) with the storage box (12a, 12b), the control station (14) situated away and the inspection and/or intervention device (20b).

5. Device according to Claim 4, wherein the communication means (32, 34) of the relay communication module (30) are arranged to transmit the information collected by the inspection device (20b) and/or the storage box (12a, 12b) to the control station (14) situated away.

6. Device according to Claim 4 or 5, wherein the relay communication module (30) comprises means (38, 40) for measuring environmental parameters and/or televisual inspection means (42).

7. Device according to Claim 6, wherein the relay communication module (30) comprises means for measuring the radiation level (40), the hydrometry, gas analysis means and a camera (42).

8. Device according to any one of Claims 4 to 7, wherein the relay communication module (30) comprises a fluid-tight shielded jacket (36).

9. Device according to any one of Claims 1 to 8, wherein the inspection and/or intervention device is a mobile robot (20, 20a, 20b).

10. Device according to Claim 9, wherein the mobile robot (20, 20a, 20b) comprises means (22) for measuring the radiation level, the hydrometry, gas analysis means and a camera (24).

11. Device according to Claim 9 or 10, wherein the mobile robot (20, 20a, 20b) comprises intervention means.

12. Device according to any one of the preceding claims, wherein the storage box (12, 12a, 12b) comprises a fluid-tight and shielded jacket (13a) made of a material providing the radiation protection and the containment of its internal equipment.

13. Device according to Claim 12, wherein the jacket (13a) is made of steel, lead or concrete.

14. Device according to any one of the preceding claims, wherein the storage box (12, 12a, 12b) comprises at least one inspection camera (18).

15. Device according to any one of the preceding claims, wherein the means for communication of the storage box (12, 12a, 12b) with the control station (14) are wired or remote links.
